# EUROPÄISCHE PATENTSCHRIFT

(11) **EP 3 011 661 B1**
(45) Veröffentlichungstag und Bekanntmachung des Hinweises auf die Patenterteilung: **05.08.2020**
(21) Anmeldenummer: 14730128.7
(22) Anmeldetag: 06.06.2014
(51) Int. Cl.: H02K 1/27, H02K 1/28, F04D 13/06

(54) **PUMPE MIT EINER VERDREHSICHERUNG UND HAUSHALTSGERÄT MIT EINER SOLCHEN PUMPE**
PUMP HAVING A ROTATION-PREVENTION MEANS, AND DOMESTIC APPLIANCE HAVING A PUMP OF THIS KIND
POMPE AVEC SÉCURITÉ ANTI-TORSION ET APPAREIL MÉNAGER ÉQUIPÉ D'UNE TELLE POMPE

(30) Priorität: 19.06.2013 DE 102013211573
(43) Veröffentlichungstag der Anmeldung: 27.04.2016
(73) Patentinhaber: BSH Hausgeräte GmbH, 81739 München (DE)
(72) Erfinder: IVANAK, Martin, 04012 Kosice (SK); KALAVSKY, Michal, 04023 Kosice (SK); LUTZ, Stephan, 86637 Zusamaltheim (DE); PERTERMANN, Hans-Holger, 01259 Dresden (DE)
(86) Internationale Anmeldenummer: PCT/EP2014/061845
(87) Internationale Veröffentlichungsnummer: WO 2014/202411

(56) Entgegenhaltungen:
- EP-A1- 1 427 087
- EP-A2- 2 573 917
- DE-A1-102004 034 176
- US-A1- 2011 062 812

## Beschreibung

Die Erfindung betrifft eine Pumpe, aufweisend einen Gleichstrom-Pumpenantriebsmotor mit einer elektrisch ansteuerbaren Statorwicklung und einem im Feld der Statorwicklung drehantreibbar gelagerten Rotor, der eine Motorwelle, einen Permanentmagnet-Ring und einen Halter aufweist, der auf der Motorwelle befestigt ist und an dem der Permanentmagnet-Ring gehalten ist, sowie ein Haushaltsgerät, insbesondere Geschirrspülmaschine oder Waschmaschine mit einer solchen Pumpe.

Die EP 1 788 690 A1 beschreibt ein Verfahren zum Herstellen eines Permanentmagnetrotors für einen synchronen Motor, insbesondere für eine Pumpe einer Waschmaschine für industrielle und private Verwendung und dergleichen, mit einem externen Stator umfassend einen zylindrischen zentralen Kern mit einer Achse und einem axialen Durchgang, der von einer Vielzahl von Permanentmagneten umgeben ist, die eine äußere Bogenfläche und eine innere Bogenfläche und Seitenkanten aufweisen, umfassend die Schritte des Anordnens eines becherartigen Körpers aus einem Plastikmaterial umfassend ein Grund-Ende, ein offenes Ende, eine Seitenwand und eine Vielzahl von sich längserstreckenden Ausnehmungen, die in der Seitenwand ausgebildet sind und Platzierungsaufnahmen für eine Platzierung der Magnete definieren; Einbringen des zentralen Kerns in den becherartigen Körper und Anordnen der Magnete in Übereinstimmung mit den Platzierungsaufnahmen; Einspritzen eines Plastikmaterials in den becherartigen Körper und um diesen herum in Übereinstimmung mit den Ausnehmungen, wobei eine käfigartige Struktur mit gegenüberliegenden Böden und Streben, die sich zwischen den gegenüberliegenden Böden erstrecken, erhalten wird, wobei die gegenüberliegenden Böden an den Enden des becherartigen Körpers angrenzen und die Streben in den Ausnehmungen aufgenommen sind.

Die EP 1 427 087 A1 beschreibt einen Rotor für einen Elektromotor, an dessen beiden axialen Enden jeweils eine Abdeckscheibe angeordnet ist, wobei an einer Abdeckscheibe einstückig mit dieser eine Anlage für ein Axiallager ausgebildet ist und an der anderen Abdeckscheibe ein in axialer Richtung nach außen gerichteter Stoppring einstückig mit der Abdeckscheibe ausgebildet ist. Im Inneren des Rotors ist eine die Rotorwelle umgebende und die Abdeckscheiben miteinander verbindende Hülse vorgesehen. An die beiden Abdeckscheiben sind axial nach außen vorstehende Vorsprünge ausgebildet, welche als Turbulenzkörper bzw. Turbulenzelemente dienen. Diese Turbulenzelemente sorgen für eine Umwälzung der Flüssigkeit, was die Entlüftung des Rotorgehäuses bei einem nass laufenden Elektromotor verbessert, da die Luft auch aus den Randbereichen eines Rotorgehäuses durch die Bewegung des Fluids herausgespült werden kann.

Die EP 2 573 917 A2 beschreibt einen Rotor mit einer Welle und einem auf der Welle durch Bildung eines Kunststoffspritzkörpers befestigten Permanentmagnet-Ring, der an seiner Stirnseite vier radial ausgerichtete Rillen aufweist, in die nach einem Umspritzen des Permanentmagnet-Rings korrespondierende Vorsprünge des Kunststoffspritzkörpers eingreifen.

Die DE 10 2004 034 176 A1 beschreibt eine Rotoranordnung mit einem Permanentmagnet-Ring. Dort sind Fixierringe vorgesehen, welche den Permanentmagnet-Ring auf einem Magnetträger einer Welle zentrieren und gegen Verdrehen sichern. Dazu sind die Fixierringe durch eine Nut- und Federverbindung mit dem Magnetring stirnseitig in Eingriff.

Die US 2011/0062812 A1 beschreibt eine Rotorstruktur mit einer Welle, einem zylindrischen Magneten und zwei gegenüberliegenden Befestigungssitzen. Die beiden gegenüberliegenden Befestigungssitze und der zylindrische Magnet weisen korrespondierende stiftförmige, axial ausgerichtete Eingriffselemente auf.

Die Aufgabe der Erfindung ist es, eine Pumpe, insbesondere ein Haushaltsgerät mit einer solchen Pumpe zu schaffen, die kostengünstig ist und insbesondere eine verbesserte Lebensdauer und/oder einen verbesserten Wirkungsgrad aufweist. Die Erfindung ist eine Pumpe gemäß dem unabhängigen Anspruch 1. Weitere Ausführungsformen der Erfindung sind in den abhängigen Ansprüchen 2-5 definiert.

Die Aufgabe der Erfindung wird gelöst durch eine Pumpe, aufweisend einen Gleichstrom-Pumpenantriebsmotor mit einer elektrisch ansteuerbaren Statorwicklung und einem im Feld der Statorwicklung drehantreibbar gelagerten Rotor, der eine Motorwelle, einen Permanentmagnet-Ring und einen Halter aufweist, der auf der Motorwelle befestigt ist und an dem der Permanentmagnet-Ring gehalten ist, wobei der Halter zur Bildung einer trommelförmigen Aufnahme für den Permanentmagnet-Ring einen kreisringzylindrischen Hülsenabschnitt aufweist, der fest mit der Motorwelle verbunden ist und an axial gegenüberliegenden Stirnseiten des Hülsenabschnitts zwei den Permanentmagnet-Ring seitlich begrenzende Kreisscheiben angeordnet sind, von denen wenigstens eine Kreisscheibe eine dem Permanentmagnet-Ring zugewandte Kreisscheibenwand aufweist, und aufweisend eine Verdrehsicherung, die ausgebildet ist, den Permanentmagnet-Ring gegen ein Verdrehen um die Achse des Rotors auf dem Halter zu sichern, wobei die Verdrehsicherung von wenigstens einem formschlüssig in jeweils wenigstens einen Sicherungsrücksprung eingreifenden Sicherungsvorsprung gebildet wird, und wobei der Sicherungsrücksprung von einer halblinsenförmigen Vertiefung in einer Ringstirnwand des Permanentmagnet-Rings gebildet wird und der Sicherungsvorsprung von einem korrespondierenden halblinsenförmigen Vorsprung an der dem Permanentmagnet-Ring zugewandten Kreisscheibenwand der wenigstens einen Kreisscheibe des Halters gebildet wird.

Eine kostengünstige Pumpe kann dadurch geschaffen werden, dass der Rotor im Wesentlichen lediglich aus den Bauteilen der Motorwelle, des Halters und des Permanentmagnet-Rings gebildet wird. Der Halter dient im Wesentlichen dazu, den Permanentmagnet-Ring an der Motorwelle zu befestigen. Da der Permanentmagnet-Ring eine ringförmige Grundgestalt aufweist und der Permanentmagnet-Ring koaxial zur Motorwelle ausgerichtet an dem Halter festgelegt ist, besteht ganz allgemein die Gefahr, dass sich aufgrund der Drehung des im Betrieb der Pumpe angetriebenen Rotors der Permanentmagnet-Ring in Rotationsrichtung von dem Halter lösen kann und insoweit durchdrehen kann. Indem die Pumpe eine Verdrehsicherung aufweist, die ausgebildet ist, den Permanentmagnet-Ring gegen ein Verdrehen um die Achse des Rotors auf dem Halter zu sichern, kann ein unerwünschtes Lösen des Permanentmagnet-Rings von dem Halter verhindert werden.

Die Verdrehsicherung wird somit von wenigstens einem formschlüssig in jeweils wenigstens einen Sicherungsrücksprung eingreifenden Sicherungsvorsprung gebildet. Durch eine solche Paarung von Sicherungsrücksprung und Sicherungsvorsprung wird eine zusätzliche formschlüssige Verbindung von Permanentmagnet-Ring und Halter geschaffen, die insbesondere ein Verdrehen des Permanentmagnet-Rings auf dem Halter zuverlässig verhindern kann.

Der wenigstens eine Sicherungsrücksprung ist an dem Permanentmagnet-Ring und der jeweils wenigstens eine zugeordnete Sicherungsvorsprung an dem Halter Dadurch können der Halter und der Permanentmagnet-Ring formschlüssig ineinander greifen.

In allen Ausführungsformen können über einen Umfang in gleichmäßigen Abständen verteilt zwei, insbesondere drei oder mehrere Paare von Sicherungsrücksprüngen und Sicherungsvorsprüngen am Rotor ausgebildet sein. Indem über einen Umfang in gleichmäßigen Abständen verteilt zwei, insbesondere drei oder mehrere Paare von Sicherungsrücksprüngen und Sicherungsvorsprüngen am Rotor vorgesehen werden, kann der Permanentmagnet-Ring in mehreren verschiedenen Winkelstellungen auf dem Halter fixiert werden. Daneben können zwei, insbesondere drei oder mehrere Paare von Sicherungsrücksprüngen und Sicherungsvorsprüngen eine bessere formschlüssige Fixierung sicherstellen, als nur ein einziges Paar von Sicherungsrücksprung und Sicherungsvorsprung.

Der Halter weist zur Bildung einer trommelförmigen Aufnahme für den Permanentmagnet-Ring einen kreisringzylindrischen Hülsenabschnitt auf, der fest mit der Motorwelle verbunden ist, wobei und an axial gegenüberliegenden Stirnseiten des Hülsenabschnitts zwei den Permanentmagnet-Ring seitlich begrenzende Kreisscheiben angeordnet sind, von denen wenigstens eine Kreisscheibe eine dem Permanentmagnet-Ring zugewandte Kreisscheibenwand aufweist, welche den wenigstens einen Sicherungsvorsprung aufweist. Der Permanentmagnet-Ring hingegen weist an wenigstens einer Ringstirnwand, die einer der Kreisscheiben des Halters zugewandt ist, den wenigstens einen korrespondierenden Sicherungsrücksprung auf. Die Kreisscheiben des Halters begrenzen den Permanentmagnet-Ring von zwei axialen Stirnseiten und legen insoweit den Permanentmagnet-Ring zunächst nur in axialer Richtung fest. Ohne eine Verdrehsicherung ist der Permanentmagnet-Ring lediglich kraftschlüssig oder stoffschlüssig auf dem Halter gegen Verdrehen fixiert. Indem wenigstens eine Kreisscheibe eine dem Permanentmagnet-Ring zugewandte Kreisscheibenwand aufweist, welche den wenigstens einen Sicherungsvorsprung aufweist, wird eine zusätzliche formschlüssig wirkende Befestigung geschaffen, welche insbesondere das Verdrehen des Permanentmagnet-Rings auf der trommelförmigen Aufnahme verhindert.

Der Sicherungsrücksprung wird von einer halblinsenförmigen Vertiefung in einer Ringstirnwand des Permanentmagnet-Rings gebildet und der Sicherungsvorsprung wird von einem korrespondierenden halblinsenförmigen Vorsprung an einer dem Permanentmagnet-Ring zugewandten Kreisscheibenwand der wenigstens einen Kreisscheibe des Halters gebildet. Indem der Permanentmagnet-Ring mit derartigen halblinsenförmigen Vertiefungen versehen wird, können scharfe Kanten und/oder Ecken in der Oberfläche des Permanentmagnet-Rings vermieden werden. Da scharfe Kanten und/oder Ecken in der Oberfläche des Permanentmagnet-Rings Spannungsrisse verursachen oder zumindest begünstigen können, ist es besonders bei den im Allgemeinen eher spröden Werkstoffen, die für den Permanentmagnet-Ring verwendet werden können, sinnvoll Kanten und/oder Ecken zu vermeiden, um Spannungsrisse verhindern oder deren Auftreten vermeiden oder der Verbreitung verzögern zu können. Dadurch lässt sich trotz Ausbildung von Vertiefungen an dem Permanentmagnet-Ring Ausschuss in der Herstellung verhindern bzw. reduzieren und die Lebensdauer des Permanentmagnet-Rings im Betrieb und folglich der gesamten Pumpe verlängern.

In ergänzenden Beispielen kann die Pumpe einen Antriebsmotor mit einer elektrisch ansteuerbaren Statorwicklung und einem im Feld der Statorwicklung in einem Nassraum des Antriebsmotors drehantreibbar gelagerten Rotor aufweisen, der eine Motorwelle, einen Rotormagneten und einen Halter aufweist, der auf der Motorwelle befestigt ist und an dem der Rotormagnet gehalten ist, und der Halter einen sich zwischen der Motorwelle und dem Rotormagneten erstreckenden Hülsenabschnitt umfasst, der wenigstens einen Strömungskanal aufweist, der ausgebildet ist, in dem Nassraum befindliche Flüssigkeit durch den Halter zu transportieren, bei welcher Pumpe der wenigstens eine Strömungskanal sich in einem radialen Abstand zur Motorwelle vollständig im Inneren des Hülsenabschnitts erstreckt.

Die im Nassraum befindliche Flüssigkeit dient unter anderem der Kühlung und/oder Schmierung des Rotors bzw. der Lager des Rotors. Um einen hohen elektromagnetischen Wirkungsgrad zu erreichen, wird die äußere Mantelwand des Rotors, d.h. des Rotormagneten konstruktiv möglichst nahe an die Statorwicklung herangeführt. Dies hat zur Folge, dass zwischen Rotor bzw. Rotormagnet und der Innenwand des Nassraums nur ein sehr geringer Spalt vorhanden ist, der insbesondere während einer Rotation des Rotors nur sehr schlecht von der Flüssigkeit durchströmt werden kann. Insoweit kann ein von einem Flüssigkeitszulauf abgewandter Nassraumbereich nur sehr schwer allein über diesen Spalt durchspült werden. Insbesondere kann in einem solchen hinteren, d.h. dem Pumpenrad abgewandten Nassraumbereich sich in unerwünschter Weise Luft- und/oder Dampfblasen ansammeln. Aufgrund der Rotation des Rotors sammeln sich tendenziell Luft- und/oder Dampfblasen im achsnahen Zentrum des Nassraumes nahe der Motorwelle und nicht in einem äußeren Umfang nahe des Spaltes. Mittels des wenigstens einen Strömungskanals kann die Flüssigkeit durch den Halter hindurch zirkulieren und insbesondere können Luft- und/oder Dampfblasen herausgeführt werden, so dass keine Gefahr besteht, dass die Lager des Rotors trockenlaufen, was die Lebensdauer der Pumpe und den Wirkungsgrad der Pumpe reduzieren würde. Durch ein Abführen von Luft- und/oder Dampfblasen läuft der Antriebsmotor und damit auch die Pumpe außerdem leiser.

Indem der wenigstens eine Strömungskanal sich in einem radialen Abstand zur Motorwelle vollständig im Inneren des Hülsenabschnitts erstreckt, kann keine Flüssigkeit die Motorwelle in dem Bereich benetzen, in dem der Halter auf der Motorwelle aufsitzt. Dadurch kann beispielsweise Korrosion in diesem Bereich verhindert oder zumindest reduziert werden. Eine Vermeidung von Korrosion ist ganz besonders in dem Bereich, in dem der Halter auf der Motorwelle aufsitzt wichtig, wenn dort zur besseren Fixierung des Halters auf der Motorwelle, die Motorwelle an ihrer Oberfläche eine Rändelung aufweist, welche die Motorwelle sowieso schwächt und anfällig für Korrosion macht. Dies ist besonders dann von Bedeutung, wenn es sich bei der Flüssigkeit beispielsweise um eine chemisch aktive Spülflotte einer Geschirrspülmaschine handelt. Wenn der wenigstens eine Strömungskanal sich in einem radialen Abstand zur Motorwelle vollständig im Inneren des Hülsenabschnitts erstreckt, kann außerdem der Halter vollumfänglich auf der Motorwelle aufsitzen, d.h. der Halter hat mit einer größtmöglichen Fläche Kontakt zur Mantelwand der Motorwelle, wodurch der Halter besonders fest und zuverlässig auf der Motorwelle festgelegt sein kann und insoweit ein unerwünschtes Lösen des Halters von der Motorwelle verhindert oder die Gefahr dazu zumindest deutlich verringert ist. Statt eines einzigen Strömungskanals können insbesondere zwei oder auch mehrere Strömungskanäle in dem Halter ausgebildet sein.

Generell kann es sich bei dem Antriebsmotor um einen bürstenlosen Gleichstrom-Nassläufer-Pumpenantriebsmotor handeln. Bei dem Rotormagneten handelt es sich um einen Permanentmagnet-Ring, der an dem Halter befestigt ist. Der wenigstens einen Strömungskanal kann ausgebildet sein, in dem Nassraum befindliche Flüssigkeit von einem ersten Stirnende des Halters zu einem axial gegenüberliegenden zweiten Stirnende des Halters zu transportieren. Der Hülsenabschnitt kann insbesondere eine innere Mantelwand aufweisen, welche die Motorwelle über ihren Umfang hinweg vollständig umschließt. Insoweit kann der Hülsenabschnitt an der Motorwelle vollumfänglich anliegen.

Der wenigstens eine Strömungskanal kann eine umfänglich geschlossenwandige Kanalwand aufweist. Die geschlossenwandige Kanalwand kann vollständig aus dem Material des Hülsenabschnitts des Halters gebildet werden. In diesen beiden alternativen oder ergänzenden Ausführungen ist sichergestellt, dass Flüssigkeit durch den Strömungskanal leckagefrei transportiert werden kann. Insoweit besteht keine Notwendigkeit eventuelle Spalte abzudichten. Es besteht damit auch keine Gefahr, dass aus dem Strömungskanal in unerwünschter Weise Flüssigkeit austreten kann, welche die Motorwelle in dem Bereich benetzen könnte, in dem der Halter auf der Motorwelle aufsitzt. Die Wandstärke einer innerhalb des Umfangs des wenigstens einen Strömungskanals liegenden Hülsen-Innenwand des Hülsenabschnitts kann in einer speziellen Ausführungsform der Erfindung größer sein, als die Wandstärke einer außerhalb des Umfangs des wenigstens einen Strömungskanals liegenden Hülsen-Außenwand des Hülsenabschnitts. Mit anderen Worten teilt der Umfang, auf dem der wenigstens eine Strömungskanal liegt den Hülsenabschnitt in einen hülsenförmigen Außenwandabschnitt und einen ebenfalls hülsenförmigen Innenwandabschnitt. Der Innenwandabschnitt weist dabei eine größere Wandstärke auf, als der Außenwandabschnitt. Indem die Wandstärke der Hülsen-Innenwand größer ist als die Wandstärke der Hülsen-Außenwand, kann ein stabiler Sitz des Halters auf der Motorwelle gewährleistet sein. Indem die Wandstärke der Hülsen-Außenwand kleiner ist als die Wandstärke der Hülsen-Innenwand liegt der wenigstens eine Strömungskanal näher an dem Rotormagneten, der generell ein Permanentmagnet-Ring ist, so dass eine Kühlung des Rotormagneten bzw. des Permanentmagnet-Rings durch die durch den wenigstens einen Strömungskanal fließende Flüssigkeit verbessert sein kann.

In allen Ausführungen kann der wenigstens eine Strömungskanal zumindest austrittsseitig einen sich im Querschnitt erweiternden Strömungskanal-Endabschnitt aufweisen. Dabei kann beispielsweise ein im Querschnitt kreisförmiger Strömungskanal im Bereich des Strömungskanal-Endabschnitts in einen beispielsweise eher ovalen und/oder bogenförmigen Strömungskanal übergehen. Indem der wenigstens eine Strömungskanal zumindest austrittsseitig einen sich im Querschnitt erweiternden Strömungskanal-Endabschnitt aufweist, kann die austretende Flüssigkeit besser abgeführt werden und sich gegebenenfalls auch besser an dem Axiallager verteilen. Die Flüssigkeit kann zumindest überwiegend oder sogar vollständig durch eine zentrale Öffnung, insbesondere einen Ringspalt zwischen dem Axiallager und der Motorwelle hindurchtreten und über eines der weiteren Lager der Motorwelle zu dem Pumpenrad zurückgeführt werden.

Insoweit kann in allen Ausführungen der wenigstens eine Strömungskanal insbesondere austrittsseitig an einer Stirnwand eines am Halter ausgebildeten Lagersitzes münden, in dem ein Gleit- oder Wälzlager, insbesondere ein Axiallager gehalten ist, welches ausgebildet ist, den Rotor bezüglich der Statorwicklung drehbar zu lagern.

Der Lagersitz kann außerdem mehrere gleichmäßig über einen Umfang verteilte, zur Bildung von Strömungsdurchbrüchen voneinander beabstandete Vorsprünge aufweisen, die sich von der Stirnwand des Halters in axialer Richtung weg erstrecken. Der Lagersitz kann dabei in Art eines kronenförmigen Halters ausgeführt sein. Die Vorsprünge können abschnittsweise unter Bildung der Strömungsdurchbrüche aus einer umlaufenden kreisringförmigen Wand des Halters gebildet werden. Der Halter kann generell als ein insbesondere einstückiges Kunststoffspritzgussteil gefertigt sein.

Die Vorsprünge können dem Lager, insbesondere Axiallager zugewandte Innenflächen aufweisen, die zum linienberührenden Anliegen an dem Lager, insbesondere Axiallager eben ausgebildet sind. Insoweit können die Innenflächen der Vorsprünge einen polygonen Zug als Sitzfläche bilden, so dass ein kreisringförmiges Lager linienberührend an diesem polygonen Zug d.h. an den Innenflächen der Vorsprünge anliegt.

Generell kann der Hülsenabschnitt mehrere, sich axial längserstreckende, gleichmäßig über einen Umfang verteilte sacklochartige Ausnehmungen aufweisen. Diese Ausnehmungen können im Querschnitt eine kreisringsegmentförmige Kontur aufweisen. Die sacklochartigen Ausnehmungen können die Materialmenge und folglich das Gewicht des Halters reduzieren. Außerdem können im Fall eines im Kunststoffspritzgussverfahren gefertigten Halters Lunker und Einfallstellen verhindert oder zumindest vermieden werden, die sich beim Abkühlen und Schrumpfen des Kunststoffmaterials des Halters ergeben könnten. Darüber hinaus können die sacklochartigen Ausnehmungen in einer speziellen Ausführungsform die Strömungskanäle bilden oder zumindest mitbilden. Insoweit kann beispielsweise der wenigstens eine Strömungskanal, insbesondere können zwei oder mehrere Strömungskanäle durch jeweils eine Ausnehmung gebildet werden, deren die sacklochartige Ausnehmung bildende geschlossen Stirnwand eröffnet ausgebildet ist. Die geschlossen Stirnwand ist insoweit durch den sich im Querschnitt erweiternden Strömungskanal-Endabschnitt ersetzt.

Der Rotor kann als ein Permanentmagnet-Innenrotor ausgebildet sein und von einem einteiligen Ring aus einem anisotropen ferromagnetischen Material gebildet werden, der mehrpolig magnetisiert ist.

Der Permanentmagnet-Ring kann derart mehrpolig magnetisiert sein, dass jedes Polpaar im Querschnitt des Permanentmagnet-Rings einen Kreisringsektor einnimmt, derart dass die magnetischen Feldlinien von der äußeren Mantelwand des Permanentmagnet-Ringes ausgehend sich radial nach innen erstrecken, innerhalb des jeweiligen Sektors nahe der inneren Mantelwand des Permanentmagnet-Ringes bogenförmig verlaufen und sich dann in Richtung der äußeren Mantelwand des Permanentmagnet-Ringes wieder radial nach außen erstrecken.

Der Permanentmagnet-Ring kann beispielsweise mit vier oder sechs Polpaaren magnetisiert sein, die in gleichgroßen Sektoren gleichmäßig über den Umfang des Ringes verteilt angeordnet sind.

Wenistens eine der Kreisscheiben kann einen Lagersitz aufweisen, in dem ein Gleit- oder Wälzlager, insbesondere Axiallager gehalten ist, welches ausgebildet ist, den Permanentmagnet-Innenrotor bezüglich der Statorwicklung drehbar zu lagern. Der Lagersitz kann eine Bodenfläche aufweisen, deren dem Lager zugewandte Oberfläche sphärisch, insbesondere konkav-sphärisch ausgebildet ist.

Alternativ oder ergänzend zu einer sphärischen Bodenfläche kann der Lagersitz mehrere gleichmäßig über den Umfang eines Außenringes des Lagers verteilte, voneinander beabstandete Vorsprünge aufweisen, die sich von einer Außenwand wenigstens eines der Kreisscheiben in axialer Richtung weg erstrecken und deren dem Lager zugewandte Innenflächen zum linienberührenden Anliegen an dem Außenring des Lagers eben ausgebildet sind.

In allen Ausführungen kann der Permanentmagnet-Ring wenigstens eine, insbesondere drei oder mehrere Positionierkerben aufweisen, die ausgebildet sind, den Permanentmagnet-Ring während eines Magnetisiervorgangs in einer Magnetisiervorrichtung gegen Verdrehen gesichert zu halten.

Ganz allgemein kann der Gleichstrom-Pumpenantriebsmotor generell als ein von Flüssigkeit durchströmter Nassläufermotor ausgebildet sein und der Permanentmagnet-Ring des Permanentmagnet-Innenrotors dabei in unmittelbarem Kontakt zur Flüssigkeit stehen.

Die Erfindung betrifft außerdem ein Haushaltsgerät, insbesondere eine Geschirrspülmaschine oder eine Waschmaschine, die eine erfindungsgemäße Pumpe aufweist.

Ein Ausführungsbeispiel der Erfindung ist exemplarisch in den beigefügten schematischen Zeichnungen dargestellt.

Es zeigen:
- Fig. 1: eine Querschnittsansicht einer beispielhaften Pumpe eines Haushaltsgeräts mit einem erfindungsgemäßen Gleichstrom-Nassläufer-Pumpenantriebsmotor,
- Fig. 2: eine perspektivische Explosionsdarstellung eines erfindungsgemäßen Permanentmagnet-Innenrotors des Gleichstrom-Nassläufer-Pumpenantriebsmotors gemäß Fig. 1;
- Fig. 3a: einen Längsschnitt entlang der Schnittlinie C-C gemäß Fig. 3b durch den Permanentmagnet-Innenrotor gemäß Fig. 2 in einem montierten Zustand;
- Fig. 3b: eine Draufsicht in axialer Richtung auf den Permanentmagnet-Innenrotor gemäß Fig. 3a;
- Fig. 3c: einen vergrößerten Ausschnitt aus der Fig. 3a im Bereich einer Verdrehsicherung;
- Fig. 4: eine Querschnittsansicht durch den Permanentmagnet-Innenrotor entlang der Schnittlinie B-B gemäß Fig. 3a;
- Fig. 5: eine vergrößerte Teilquerschnittsansicht der beispielhaften Pumpe im Bereich eines erfindungsgemäßen Halters des Permanentmagnet-Innenrotors gemäß Fig. 3a mit einer Darstellung von erfindungsgemäßen Strömungskanälen;
- Fig. 6a: eine Querschnittsansicht durch den Gleichstrom-Nassläufer-Pumpenantriebsmotor mit dem im Feld der Statorwicklung drehbar gelagerten Permanentmagnet-Innenrotor; und
- Fig. 6b: eine schematische Darstellung der magnetischen Feldlinien im Querschnitt durch den Gleichstrom-Nassläufer-Pumpenantriebsmotor mit dem im Feld der Statorwicklung drehbar gelagerten Permanentmagnet-Innenrotor gemäß Fig. 6a.

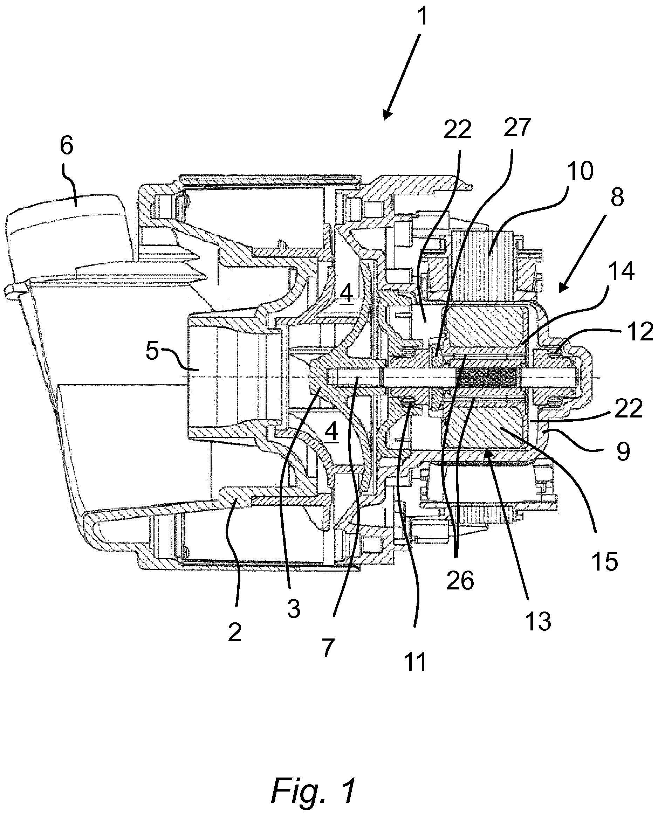

Eine in Fig. 1 beispielhaft dargestellte Pumpe 1 eines Haushaltsgeräts weist ein Pumpengehäuse 2 auf, in dem ein Pumpenrad 3 drehbar angeordnet ist. Das Pumpenrad 3 weist mehrere Schaufeln 4 auf, die ausgebildet und angeordnet sind Flüssigkeit über eine Eintrittsöffnung 5 axial anzusaugen und über eine Austrittsöffnung 6 radial auszustoßen. Im vorliegenden Ausführungsbeispiel bildet die Pumpe 1 folglich eine Kreiselpumpe in der Bauart einer Radialpumpe. Das Pumpenrad 3 sitzt drehfest auf einer Motorwelle 7 eines bürstenlosen Gleichstrom-Nassläufer-Pumpenantriebsmotor 8.

Der Gleichstrom-Nassläufer-Pumpenantriebsmotor 8 ist in einem Motorgehäuse 9 angeordnet. Das Motorgehäuse 9 ist im Falle des vorliegenden Ausführungsbeispiels unmittelbar mit dem Pumpengehäuse 2 verbunden. Gegebenenfalls kann das Motorgehäuse 9 zusammen mit dem Pumpengehäuse 2 eine Baueinheit bilden, oder sogar einteilig ausgebildet sein. Der Gleichstrom-Nassläufer-Pumpenantriebsmotor 8 weist einer elektrisch ansteuerbare Statorwicklung 10 und einen im Feld der Statorwicklung 10 antreibbaren und mittels der Motorwelle 7 im Feld zwischen zwei gegenüberliegenden Lagern 11, 12 drehbar gelagerten Rotor 13 auf.

Der Gleichstrom-Nassläufer-Pumpenantriebsmotor 8 des dargestellten Ausführungsbeispiels ist als ein von Flüssigkeit durchströmter Nassläufermotor ausgebildet, bei dem der Rotor 13 innerhalb eines Motorgehäuses 9 in einem Nassraum 22 gelagert ist, der von Flüssigkeit aus dem Pumpengehäuse 2 durchflutet ist. Die Statorwicklung 10 ist dabei in trockener Umgebung außerhalb des Motorgehäuses 9 angeordnet.

In dargestellten Ausführungsbeispiel weist der Rotor 13 im Wesentlichen die Motorwelle 7, einen auf der Motorwelle 7 drehfest befestigten Halter 14 und einen an dem Halter 14 drehfest und axial fixierten Permanentmagnet-Ring 15 auf.

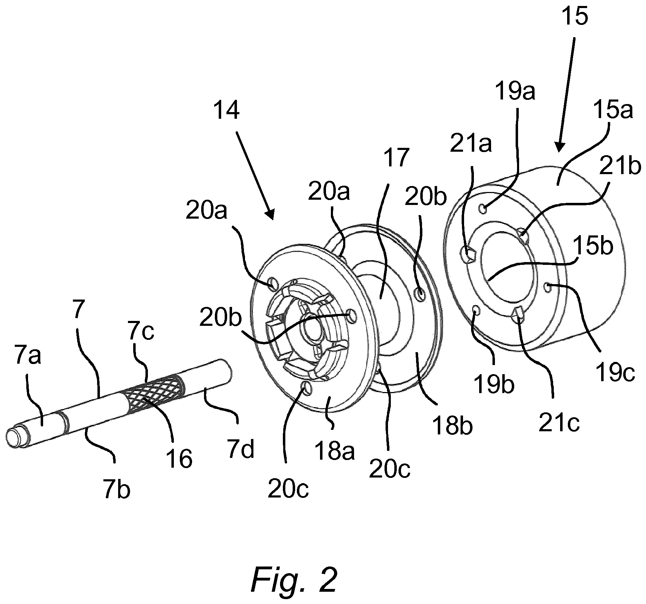

Dieser Permanentmagnet-Innenrotor ist in Fig. 2 in einer explodierten Darstellung näher gezeigt.

Die Motorwelle 7 weist ein vorderes Wellenende 7a auf, an dem das Pumpenrad 3 zu befestigen ist. In einem mittleren Abschnitt 7c weist die Motorwelle 7 an seiner Außenmantelwand eine Rändelung 16 auf, die ausgebildet ist, den Halter 14 drehfest auf der Motorwelle 7 zu fixieren. Lagerflächenabschnitte 7b, 7d bilden Sitze für die Wellenlager 11, 12 und ein Axiallager 27 welche ausgebildet sind, die Motorwelle 7 in dem Motorgehäuse 9 drehbar zu lagern.

Der Permanentmagnet-Ring 15 des Rotors 13 steht im Nassraum 22 in unmittelbarem Kontakt zur Flüssigkeit (Fig. 1). Der Rotor 13 weist einen einteiligen Permanentmagnet-Ring 15 aus einem anisotropen ferromagnetischen Material auf, der mehrpolig magnetisiert ist.

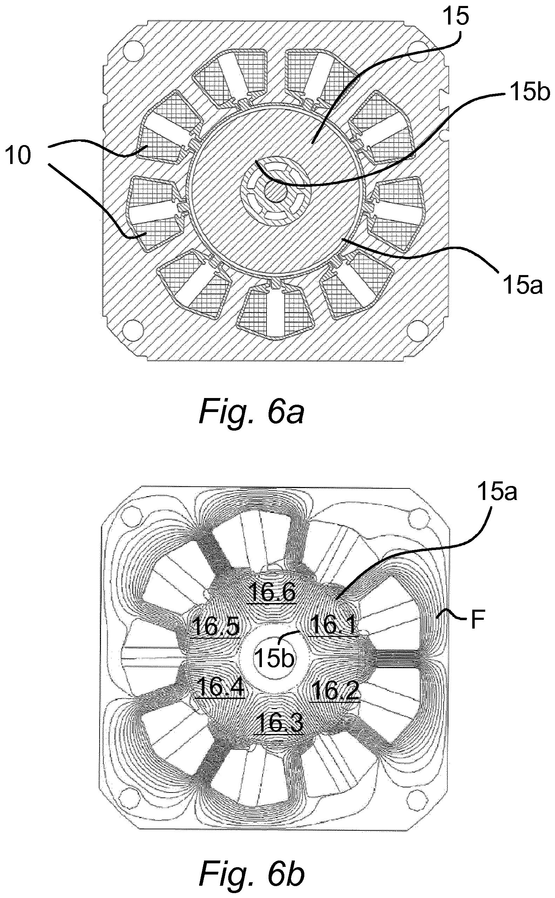

Der Permanentmagnet-Ring 15 ist derart mehrpolig magnetisiert, dass jedes Polpaar 16.1 bis 16.6, wie in Fig. 6a und 6b schematisch dargestellt, im Querschnitt des Permanentmagnet-Rings 15 einen Kreisringsektor einnimmt, derart dass die magnetischen Feldlinien F von einer äußeren Ringwand 15a des Permanentmagnet-Ringes 15 ausgehend sich radial nach innen erstrecken, innerhalb des jeweiligen Sektors nahe einer inneren Ringwand 15b des Permanentmagnet-Ringes 15 bogenförmig verlaufen und sich dann in Richtung der äußeren Ringwand 15a des Permanentmagnet-Ringes 15 wieder radial nach außen erstrecken, wie dies insbesondere in Fig. 6b dargestellt ist. Der Permanentmagnet-Ring 15 ist im gezeigten Ausführungsbeispiel mit sechs Polpaaren 16.1 bis 16.6 magnetisiert, die in gleichgroßen Sektoren gleichmäßig über den Umfang des Ringes verteilt angeordnet sind. Der Permanentmagnet-Ring 15 kann jedoch beispielsweise auch mit vier oder acht Polpaaren ausgeführt sein.

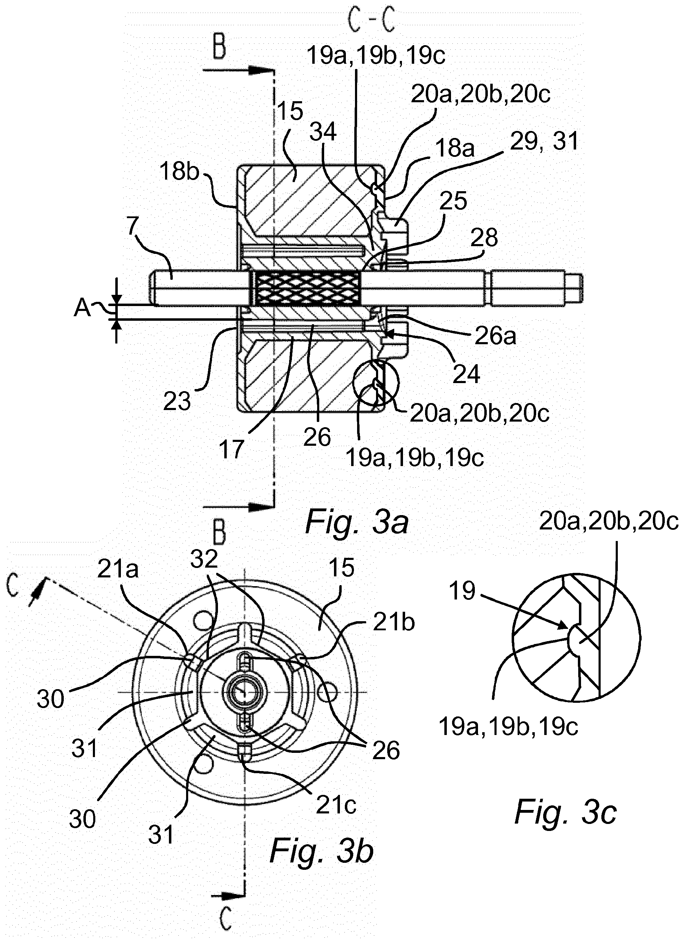

Wie insbesondere in der Fig. 2 und Fig. 3a dargestellt weist der Halter 14 zur Bildung einer trommelförmigen Aufnahme für den Permanentmagnet-Ring 15 einen kreisringzylindrischen Hülsenabschnitt 17 auf, der fest mit der Motorwelle 7 verbunden ist. An axial gegenüberliegenden Stirnseiten des Hülsenabschnitts 17 sind zwei Kreisscheiben 18a, 18b angeordnet, die jeweils einen größeren Außendurchmesser aufweisen, als der Hülsenabschnitt 17, so dass zwischen den Kreisscheiben 18a, 18b der Permanentmagnet-Ring 15 axial fixiert durch die Kreisscheiben 18a, 18b gehalten ist.

Der Permanentmagnet-Ring 15 weist im Falle des in den Fig. 3a bis 3c dargestellten Ausführungsbeispiels drei Verdrehsicherungen 19 in Form von Sicherungsrücksprüngen 19a, 19b, 19c auf, die ausgebildet sind, in korrespondierende Sicherungsvorsprünge 20a, 20b, 20c einzugreifen, die an wenigstens einem der beiden Kreisscheiben 18a, 18b des Halters 14 ausgebildet sind, um in einer ineinander greifenden Position den Permanentmagnet-Ring 15 drehfest an dem Halter 14 zu fixieren.

Jeder Sicherungsrücksprung 19a, 19b, 19c wird erfindungsgemäß von einer halblinsenförmigen Vertiefung in einer Ringstirnwand in dem Permanentmagnet-Ring 15 gebildet. Jeder Sicherungsvorsprung 20a, 20b, 20c wird dabei von einem korrespondierenden halblinsenförmigen Vorsprung an einer dem Permanentmagnet-Ring 15 zugewandten Kreisscheibenwand der wenigstens einen Kreisscheibe 18a, 18b des Halters (14) gebildet. Indem der Permanentmagnet-Ring 15 mit derartigen halblinsenförmigen Vertiefungen versehen ist, können scharfe Kanten und/oder Ecken in der Oberfläche des Permanentmagnet-Rings 15 vermieden werden.

Ergänzend weist im Falle des dargestellten Ausführungsbeispiels der Permanentmagnet-Ring 15 drei Positionierkerben 21a, 21b, 21c auf, die ausgebildet sind, den Permanentmagnet-Ring 15 während eines Magnetisiervorgangs in einer (nicht dargestellten) Magnetisiervorrichtung gegen Verdrehen gesichert zu halten.

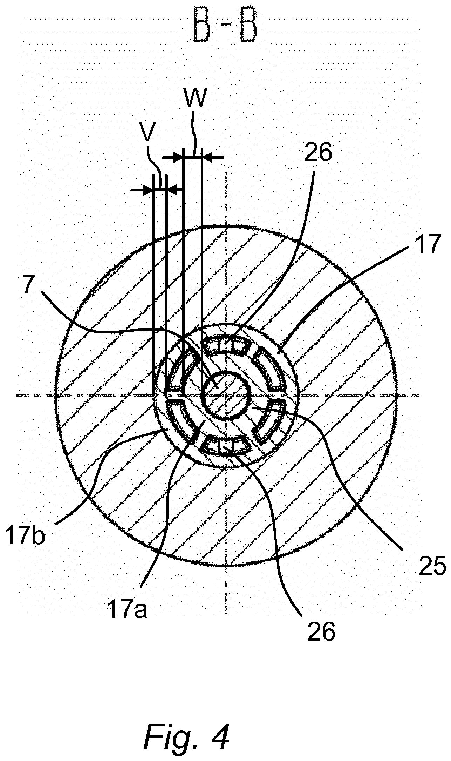

Im Falle des vorliegenden Ausführungsbeispiels weist der Hülsenabschnitt 17 zwei Strömungskanäle 26 auf. Die beiden Strömungskanäle 26 sind gegenüberliegend , d.h. um 180 Grad versetzt zueinander auf einem gemeinsamen Umfang angeordnet, wie dies insbesondere in der Fig. 3b und Fig. 4 dargestellt ist. Jeder Strömungskanal 26 ist ausgebildet, in dem Nassraum 22 befindliche Flüssigkeit von einem ersten Stirnende 23 des Halters 14 zu einem axial gegenüberliegenden zweiten Stirnende 24 des Halters 14 zu transportieren. Jeder Strömungskanal 26 erstreckt sich parallel zur axialen Länge der Motorwelle 7. Der Hülsenabschnitt 17 weist eine innere Mantelwand 25 auf, welche die Motorwelle 7 über ihren Umfang hinweg vollständig umschließend an der Motorwelle 7 anliegt, wie dies insbesondere auch in Fig. 4 zu sehen ist. Jeder Strömungskanal 26 erstreckt sich dabei in einem radialen Abstand A zur Motorwelle 7 vollständig im Inneren des Hülsenabschnitts 17. Jeder Strömungskanal 26 weist dabei eine umfänglich geschlossenwandige Kanalwand auf. Die geschlossenwandige Kanalwand wird vollständig aus dem Material des Hülsenabschnitts 17 des Halters 14 gebildet.

Im Falle des vorliegenden Ausführungsbeispiels der Erfindung ist die Wandstärke W einer innerhalb des Umfangs des wenigstens einen Strömungskanals 26 liegenden Hülsen-Innenwand 17a des Hülsenabschnitts 17, wie in Fig. 4 gezeigt, größer, als die Wandstärke V einer außerhalb des Umfangs des wenigstens einen Strömungskanals 26 liegenden Hülsen-Außenwand 17b des Hülsenabschnitts 17.

In der Fig. 3a ist rechtsseitig unterhalb der Motorwelle 7 dargestellt, dass der gezeigte Strömungskanal 26 austrittsseitig einen sich im Querschnitt erweiternden Strömungskanal-Endabschnitt 26a aufweist.

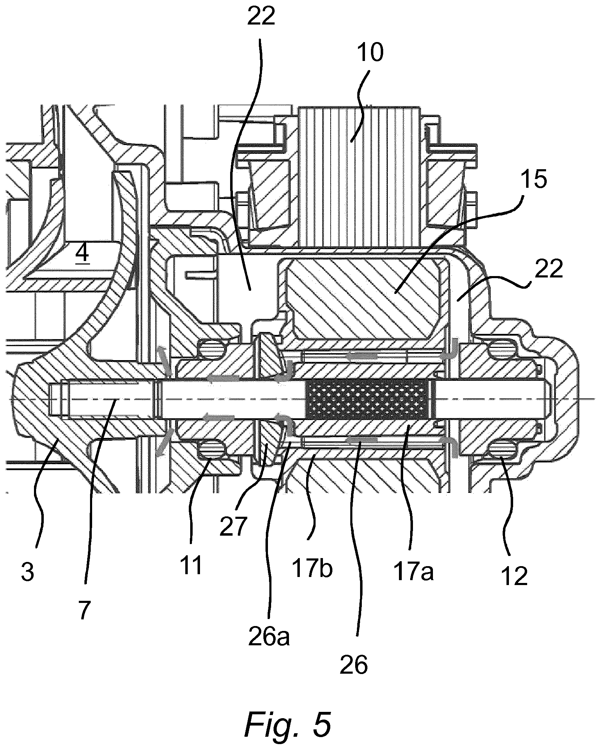

Die Strömungskanäle 26 münden insbesondere austrittsseitig (siehe Pfeile in Fig. 5) an einer Stirnwand 28 eines am Halter 14 ausgebildeten Lagersitzes 29, in dem das Axiallager 27 gehalten ist. Der Lagersitz 29 weist mehrere gleichmäßig über einen Umfang verteilte, zur Bildung von Strömungsdurchbrüchen 30 voneinander beabstandete Vorsprünge 31 auf, die sich von der Stirnwand 28 des Halters 14 in axialer Richtung weg erstrecken. Die Vorsprünge 31 weisen dem Axiallager 27 zugewandte Innenflächen 32 auf, die zum linienberührenden Anliegen an dem Axiallager 27 eben ausgebildet sind.

Der Hülsenabschnitt 17 weist mehrere, sich axial längserstreckende, gleichmäßig über einen Umfang verteilte sacklochartige Ausnehmungen 33 auf. Die Ausnehmungen 33 weisen im Querschnitt eine kreisringsegmentförmige Kontur auf. Jeder Strömungskanal 26 wird durch jeweils eine Ausnehmung 33 gebildet, deren die sacklochartige Ausnehmung 33 bildende geschlossen Stirnwand 34 eröffnet ausgebildet ist. Die geschlossen Stirnwand 34 ist insoweit durch den sich im Querschnitt erweiternden Strömungskanal-Endabschnitt 26a ersetzt.

### Bezugszeichenliste

- 1: Pumpe
- 2: Pumpengehäuse
- 3: Pumpenrad
- 4: Schaufeln
- 5: Eintrittsöffnung
- 6: Austrittsöffnung
- 7: Motorwelle
- 7a: vorderes Wellenende
- 7b, 7d: Lagerflächenabschnitte
- 7c: mittlerer Abschnitt
- 8: Gleichstrom-Pumpenantriebsmotor
- 9: Motorgehäuse
- 10: Statorwicklung
- 11, 12: Lagern
- 13: Rotor
- 14: Halter
- 15: Permanentmagnet-Ring
- 15a: äußere Ringwand
- 15b: innere Ringwand
- 16.1 bis 16.6: Polpaar
- 17: Hülsenabschnitt
- 17a: Hülsen-Innenwand
- 17b: Hülsen-Außenwand
- 18a, 18b: Kreisscheiben
- 19: Verdrehsicherungen
- 19a, 19b, 19c: Sicherungsrücksprünge
- 20a,20b,20c: Sicherungsvorsprünge
- 21a,21b,21c: Positionierkerben
- 22: Nassraum
- 23: erstes Stirnende
- 24: zweites Stirnende
- 25: innere Mantelwand
- 26: Strömungskanal
- 27: Axiallager
- 28: Stirnwand
- 29: Lagersitz
- 30: Strömungsdurchbrüche
- 31: Vorsprünge
- 32: Innenflächen
- 33: sacklochartige Ausnehmungen
- 34: geschlossene Stirnwand
- F: Feldlinien
- A: radialer Abstand
- W: größere Wandstärke
- V: kleinere Wandstärke

## Patentansprüche

1. Pumpe, aufweisend einen Gleichstrom-Pumpenantriebsmotor (8) mit einer elektrisch ansteuerbaren Statorwicklung (10) und einem im Feld der Statorwicklung (10) drehantreibbar gelagerten Rotor (13), der eine Motorwelle (7), einen Permanentmagnet-Ring (15) und einen Halter (14) aufweist, der auf der Motorwelle (7) befestigt ist und an dem der Permanentmagnet-Ring (15) gehalten ist, wobei der Halter (14) zur Bildung einer trommelförmigen Aufnahme für den Permanentmagnet-Ring (15) einen kreisringzylindrischen Hülsenabschnitt (17) aufweist, der fest mit der Motorwelle (7) verbunden ist und an axial gegenüberliegenden Stirnseiten des Hülsenabschnitts (17) zwei den Permanentmagnet-Ring (15) seitlich begrenzende Kreisscheiben (18a, 18b) angeordnet sind, von denen wenigstens eine Kreisscheibe (18a, 18b) eine dem Permanentmagnet-Ring (15) zugewandte Kreisscheibenwand aufweist, und aufweisend eine Verdrehsicherung (19), die ausgebildet ist, den Permanentmagnet-Ring (15) gegen ein Verdrehen um die Achse des Rotors (13) auf dem Halter (14) zu sichern, wobei die Verdrehsicherung (19) von wenigstens einem formschlüssig in jeweils wenigstens einen Sicherungsrücksprung (19a, 19b, 19c) eingreifenden Sicherungsvorsprung (20a,20b,20c) gebildet wird, **dadurch gekennzeichnet, dass** der Sicherungsrücksprung (19a, 19b, 19c) von einer halblinsenförmigen Vertiefung in einer Ringstirnwand des Permanentmagnet-Rings (15) gebildet wird und der Sicherungsvorsprung (20a,20b,20c) von einem korrespondierenden halblinsenförmigen Vorsprung an der dem Permanentmagnet-Ring (15) zugewandten Kreisscheibenwand der wenigstens einen Kreisscheibe (18a, 18b) des Halters (14) gebildet wird.

2. Pumpe nach Anspruch 1, **dadurch gekennzeichnet, dass** über einen Umfang in gleichmäßigen Abständen verteilt zwei, insbesondere drei oder mehrere Paare von Sicherungsrücksprüngen (19a, 19b, 19c) und Sicherungsvorsprüngen (20a,20b,20c) am Rotor (13) ausgebildet sind.

3. Pumpe nach Anspruch 1 oder 2, **dadurch gekennzeichnet, dass** der Permanentmagnet-Ring (15) wenigstens eine, insbesondere drei oder mehrere Positionierkerben (21a,21b,21c) aufweist, die ausgebildet sind, den Permanentmagnet-Ring (15) während eines Magnetisiervorgangs in einer Magnetisiervorrichtung gegen Verdrehen gesichert zu halten.

4. Pumpe nach einem der Ansprüche 1 bis 3, **dadurch gekennzeichnet, dass** der Gleichstrom-Pumpenantriebsmotor (8) als ein von Flüssigkeit durchströmter Nassläufermotor ausgebildet ist und der Permanentmagnet-Ring (15) insbesondere in unmittelbarem Kontakt zur Flüssigkeit steht.

5. Haushaltsgerät, insbesondere Geschirrspülmaschine oder Waschmaschine aufweisend eine Pumpe (1) nach einem der Ansprüche 1 bis 4.

## Claims

1. Pump having a DC pump drive motor (8) with an electrically controllable stator winding (10) and a rotor (13) which is mounted such that it can be driven in rotation in the field of the stator winding (10), and which has a motor shaft (7), a permanent-magnet ring (15) and a holder (14), which is mounted on the motor shaft (7) and on which the permanent-magnet ring (15) is held, wherein the holder (14), in order to form a drum-shaped receptacle for the permanent-magnet ring (15), has a circular ring-cylindrical sleeve segment (17), which is permanently connected to the motor shaft (7) and two circular disks (18a, 18b) laterally delimiting the permanent-magnet ring (15) are arranged on axially opposing front faces of the sleeve segment (17), of which circular disks at least one circular disk (18a, 18b) has a circular disk wall facing the permanent-magnet ring (15), and having a rotation prevention means (19), which is embodied to secure the permanent-magnet ring (15) against rotation about the axis of the rotor (13) on the holder (14), wherein the rotation prevention means (19) is formed of at least one securing projection (20a, 20b, 20c) engaging in a form-fit manner into at least one securing recess (19a, 19b, 19c) in each case, **characterised in that** the securing recess (19a, 19b, 19c) is formed of a half-lens-shaped depression in an annular front wall of the permanent magnet ring (15) and the securing projection (20a, 20b, 20c) is formed of a corresponding half-lens-shaped depression on the circular disk wall, of the at least one circular disk (18a, 18b) of the holder (14), facing the permanent-magnet ring (15).

2. Pump according to claim 1, **characterised in that** two, in particular three or more pairs of securing recesses (19, 19b, 19c) and securing projections (20a, 20b, 20c) are embodied on the rotor (13) distributed at equal distances over a periphery.

3. Pump according to claim 1 or 2, **characterised in that** the permanent-magnet ring (15) has at least one, in particular three or more positioning notches (21a, 21b, 21c) which are embodied to securely hold the permanent-magnet ring (15) against rotation during a magnetisation process in a magnetisation apparatus.

4. Pump according to one of claims 1 to 3, **characterised in that** the DC pump drive motor (8) is embodied as a wet-running motor through which liquid passes and the permanent magnet ring (15) is in particular in direct contact with the liquid.

5. Household appliance, in particular dishwasher or washing machine, having a pump (1) according to one of claims 1 to 4.

## Revendications

1. Pompe, comprenant un moteur d'entraînement de pompe à courant continu (8) avec un enroulement de stator à commande électrique (10) et un rotor (13) monté de manière à pouvoir être entraîné en rotation dans le champ de l'enroulement de stator (10), lequel rotor (13) comprend un arbre de moteur (7), une bague à aimant permanent (15) et un support (14) qui est fixé sur l'arbre de moteur (7) et sur lequel est maintenue la bague à aimant permanent (15), dans laquelle le support (14) comprend une section formant douille cylindrique annulaire (17) pour la formation d'un logement en forme de tambour pour la bague à aimant permanent (15), laquelle section formant douille (17) est reliée fixement à l'arbre de moteur (7), et deux disques circulaires (18a, 18b) délimitant latéralement la bague à aimant permanent (15) sont disposés sur des faces avant axialement opposées de la section formant douille (17), parmi lesquels au moins un disque circulaire (18a, 18b) comprend une paroi de disque circulaire tournée vers la bague à aimant permanent (15), et comprenant une sécurité anti-torsion (19) qui est conçue pour sécuriser sur le support (14) la bague à aimant permanent (15) contre une torsion autour de l'axe du rotor (13), dans laquelle la sécurité anti-torsion (19) est formée d'au moins une saillie de sécurité (20a, 20b, 20c) s'engageant par complémentarité de forme dans respectivement au moins un évidement de sécurité (19a, 19b, 19c), **caractérisée en ce que** l'évidement de sécurité (19a, 19b, 19c) est formé d'un renfoncement en forme de demi-lentille dans une paroi avant de bague de la bague à aimant permanent (15) et la saillie de sécurité (20a, 20b, 20c) est formée d'une saillie en forme de demi-lentille correspondante sur la paroi de disque circulaire tournée vers la bague à aimant permanent (15) de l'au moins un disque circulaire (18a, 18b) du support (14).

2. Pompe selon la revendication 1, **caractérisée en ce que** sur un pourtour, de manière répartie à des intervalles réguliers, sont conçues deux, en particulier trois paires ou plus d'évidements de sécurité (19a, 19b, 19c) et de saillies de sécurité (20a, 20b, 20c) sur le rotor (13).

3. Pompe selon la revendication 1 ou 2, **caractérisée en ce que** la bague à aimant permanent (15) comprend au moins une, en particulier trois encoches de positionnement (21a, 21b, 21c) ou plus, lesquelles sont conçues pour maintenir de manière sécurisée contre la torsion la bague à aimant permanent (15) pendant un processus d'aimantation dans un dispositif d'aimantation.

4. Pompe selon l'une des revendications 1 à 3, **caractérisée en ce que** le moteur d'entraînement de pompe à courant continu (8) est conçu sous la forme d'un moteur à rotor immergé à écoulement de liquide et la bague à aimant permanent (15) est en particulier en contact direct avec le liquide.

5. Appareil ménager, en particulier machine à laver la vaisselle ou machine à laver comprenant une pompe (1) selon l'une des revendications 1 à 4.
